# FASCICULE DE BREVET EUROPEEN

(11) **EP 3 109 597 B1**
(45) Date de publication et mention de la délivrance du brevet: **03.05.2023**
(21) Numéro de dépôt: 16176192.9
(22) Date de dépôt: 24.06.2016
(51) Int. Cl.: G01C 23/00, B64F 1/18, G08G 5/06, G08G 5/02, B64D 45/08, G08G 5/00

(54) **SYSTÈME D'AFFICHAGE D'UN AÉRONEF, PROPRE À AFFICHER UN MARQUAGE DE LOCALISATION D'UNE ZONE DE PRÉSENCE D'UNE RAMPE LUMINEUSE D'APPROCHE ET PROCÉDÉ ASSOCIÉ**
ANZEIGESYSTEM FÜR LUFTFAHRZEUG, DAS SICH ZUR ANZEIGE EINER LOKALISIERUNGSMARKIERUNG EINER PRÄSENZZONE EINER LEUCHTRAMPE ZUM ANFLUG EIGNET, UND ENTSPRECHENDES VERFAHREN
DISPLAY SYSTEM OF AN AIRCRAFT, ABLE TO DISPLAY A LOCALIZATION MARKING OF A ZONE OF LOCATION OF A APPROACH LIGHT RAMP AND RELATED METHOD

(30) Priorité: 24.06.2015 FR 1501311
(43) Date de publication de la demande: 28.12.2016
(73) Titulaire: Dassault Aviation, 75008 Paris (FR)
(72) Inventeur: BAUDSON, Olivier, 92150 Suresnes (FR); TURPIN, Arnaud, 92100 Boulogne Billancourt (FR)
(74) Mandataire: Lavoix

(56) Documents cités:
- EP-A1- 2 717 229
- EP-A1- 2 717 230
- EP-A2- 2 317 488
- EP-A2- 2 492 890
- EP-A2- 3 079 138
- US-A- 4 210 930
- US-A1- 2002 099 528
- US-A1- 2015 002 316
- US-B1- 8 249 806
- US-B1- 8 917 191

## Description

La présente invention concerne un système d'affichage d'un aéronef selon la revendication 1.

EP 2 717 229, EP 2 717 230, US 8 249 806, US 8 917 291, et US 4 210 930 décrivent des systèmes du type précité.

Un tel système est destiné à être implanté dans le cockpit d'un aéronef, pour être associé à un afficheur du cockpit. L'afficheur est par exemple un afficheur au moins partiellement transparent, tel qu'un écran semi transparent placé devant un pare-brise du cockpit, un système de projection d'images sur le pare-brise du cockpit, un pare-soleil semi-transparent, un viseur de casque, ou encore une lunette semi-transparente proche de l'œil.

En variante, l'afficheur constitue un écran tête basse intégré dans le tableau de bord du cockpit.

Le système d'affichage est destiné à faciliter le pilotage de l'aéronef lors d'un atterrissage dans des conditions de visibilité faible ou nulle.

Dans de telles conditions, des systèmes de guidage permettent au pilote d'approcher au plus près de la piste d'atterrissage. Néanmoins, l'atterrissage n'est possible que lorsque le pilote voit effectivement la piste.

Dans tous les cas, en fin d'approche, le pilote cherche visuellement à repérer la position de la piste d'atterrissage, afin de prendre la décision d'atterrir, ou au contraire d'effectuer une manoeuvre de remise des gaz.

Pour faciliter le repérage du seuil de piste en conditions de visibilité faible, les aérodromes modernes sont équipés de rampes lumineuses d'approche, situées longitudinalement à l'avant du seuil de piste.

Ces rampes comprennent généralement au moins une ligne longitudinale de lampes alignées suivant l'axe de piste, et perpendiculairement à la ligne longitudinale, au moins une ligne transversale de lampes croisant la ligne longitudinale.

En approche avec une faible visibilité, le pilote cherche donc à repérer en premier lieu la présence de la rampe lumineuse d'approche.

Cette recherche peut être fastidieuse. Le pilote doit en effet de manière répétitive contrôler les paramètres de vol pour s'assurer que la pente et la vitesse de l'aéronef sont adéquates en cours de descente, et simultanément localiser la zone dans laquelle il s'attend à trouver une rampe lumineuse et déterminer s'il voit la rampe dans cette zone.

S'il ne voit pas la rampe, il doit à nouveau contrôler les paramètres de vol, et déterminer à nouveau la présence éventuelle de la rampe lumineuse. Le va et vient entre ces différentes tâches entraine ponctuellement une importante charge de travail pour l'équipage.

Un but de l'invention est donc de disposer d'un système d'affichage qui facilite le travail du pilote en vue de repérer la piste lors d'une approche dans des conditions de faible visibilité.

À cet effet, l'invention a pour objet un système selon la revendication 1.

Le système selon l'invention peut comprendre l'une ou plusieurs des revendications 2 à 10 ou des caractéristiques suivantes, prise(s) isolément ou suivant toute combinaison techniquement possible :
- la rampe lumineuse d'approche s'étend à l'avant de la piste d'atterrissage, dans l'axe de celle-ci ;
- l'ensemble de génération d'affichage comporte un module de génération d'un marquage de localisation d'une zone de présence d'une rampe lumineuse d'approche vers la piste d'atterrissage, le module de génération étant propre à calculer en temps réel la position géographique d'une zone géographique au sol contenant au moins 50%, et de préférence totalement la rampe lumineuse d'approche ;
- la zone géographique présente une forme polygonale, notamment une forme de trapèze ;
- le système est destiné à être implanté dans le cockpit d'un aéronef, pour être associé à un afficheur du cockpit ;
- l'ensemble de génération d'affichage est propre à afficher, en approche d'une piste d'atterrissage, un marquage de localisation sur l'afficheur d'une zone de présence d'une rampe lumineuse d'approche vers la piste d'atterrissage ;
- l'ensemble de génération d'affichage sur l'afficheur est raccordé à l'afficheur et à un système de capteurs de mesure ;
- les capteurs de mesure sont propres à fournir une information sur la position géographique de l'aéronef, sur sa vitesse, son cap et son attitude ;
- l'afficheur permet au pilote d'observer, notamment par transparence, l'espace situé à l'avant de l'aéronef et simultanément, un affichage engendré par l'ensemble de génération d'affichage.

L'invention a également pour objet un procédé selon la revendication 11.

L'invention sera mieux comprise à la lecture de la description qui va suivre, donnée uniquement à titre d'exemple, et faite en se référant aux dessins annexés, sur lesquels :
- la figure 1 est une vue schématique d'un premier système d'affichage d'un aéronef selon l'invention ;
- la figure 2 illustre schématiquement le cockpit d'un aéronef comprenant le premier système d'affichage ;
- les figures 3 à 4 illustrent l'affichage engendré par le système d'affichage lors de l'approche de l'aéronef vers une piste d'atterrissage ;
- les figures 5 à 8 illustrent en vue de dessus, plusieurs configurations de rampes lumineuses d'approche de pistes d'atterrissages ;
- la figure 9 illustre l'affichage engendré par une variante de système d'affichage, avant l'approche de l'aéronef vers la piste d'atterrissage ;
- la figure 10 est une vue analogue à la figure 5 illustrant une variante de zone géographique contenant la rampe d'approche.

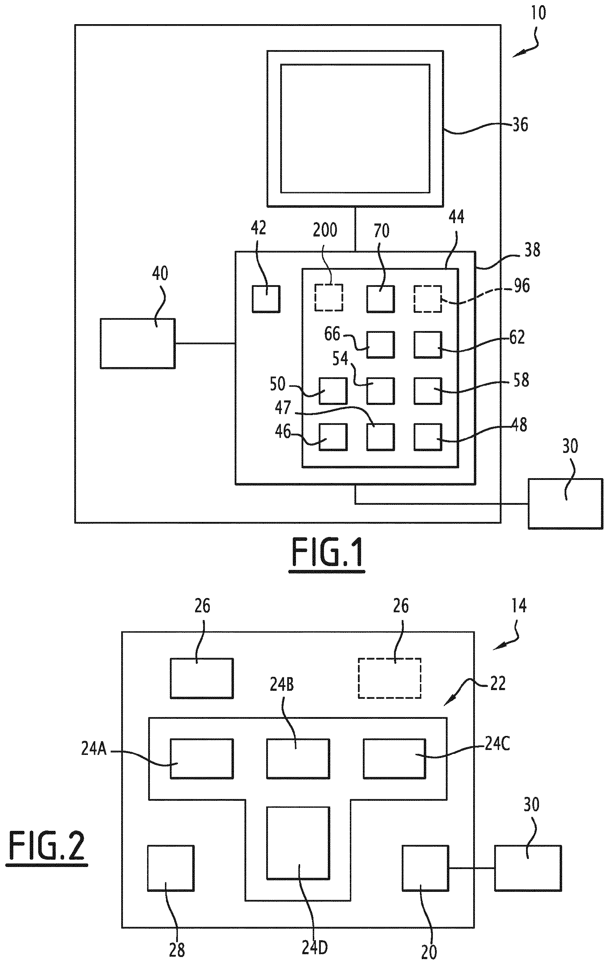

Un premier système 10 d'affichage d'un aéronef selon l'invention est illustré schématiquement par les figures 1 et 2.

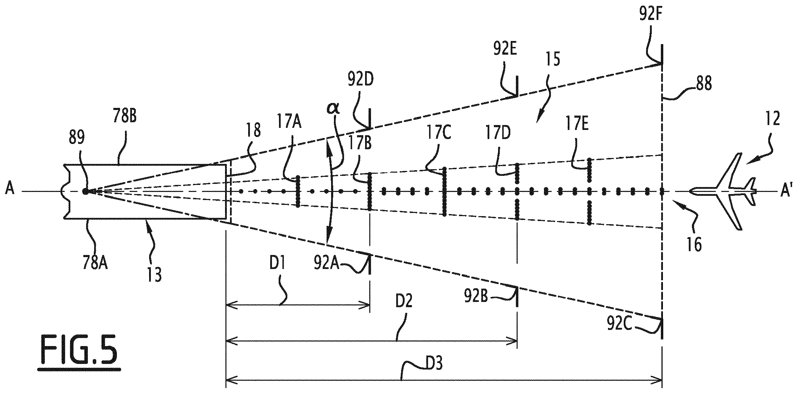

Ce système 10 est destiné à être installé dans un aéronef 12, visible schématiquement sur la figure 5, pour permettre l'affichage d'informations sur un afficheur présent dans le cockpit 14 de l'aéronef, représenté schématiquement sur la figure 2.

Le système 10 est destiné à assister le pilote de l'aéronef 12 lors d'une phase d'approche, au voisinage d'une piste d'atterrissage 13, représentée schématiquement sur la figure 5.

En particulier, le système 10 est destiné à aider le pilote dans le repérage visuel d'une rampe lumineuse d'approche 15 vers la piste d'atterrissage 13 depuis le cockpit 14, en vue de prendre la décision de poursuivre ou non l'atterrissage sur la piste d'atterrissage 13.

D'une manière générale, en référence aux figures 5 à 8, la rampe lumineuse d'approche 15 s'étend à l'avant de la piste d'atterrissage 13, dans l'axe A-A' de celle-ci.

Elle comporte au moins une ligne axiale 16 de lampes matérialisant l'axe de piste A-A', et au moins une ligne transversale 17A à 17E de lampes, perpendiculaire à la ligne axiale 16, croisant la ligne axiale 16 et s'étendant de part et d'autre de la ligne axiale 16.

La ligne axiale 16 s'étend depuis le seuil de piste 18, sur une distance axiale, prise à partir du seuil de piste 18, supérieure à 426 m (1400 pieds), et généralement comprise entre 426 m et 1067 m (3500 pieds).

Les lignes transversales 17A à 17E sont espacées longitudinalement les unes des autres. De préférence, au moins une ligne transversale 17B s'étend transversalement à une distance comprise entre 274 m (900 pieds) et 335 m (1100 pieds) du seuil de piste 18, de préférence à 300 m (1000 pieds) du seuil de piste 18.

Des exemples non exhaustifs de rampes d'approche 15 courantes vont être décrits successivement en regard des figures 5 à 8.

Dans l'exemple représenté sur la figure 5, la largeur de la ligne axiale 16, résultant du nombre de lampes qui la compose, diminue en se rapprochant du seuil de piste 18.

Dans l'exemple représenté sur la figure 5, les lignes transversales 17A à 17E sont espacées longitudinalement les unes des autres d'au moins 150 m (500 pieds).

La largeur des lignes transversales 17A à 17E diminue en se rapprochant du seuil de piste 18.

La largeur de la ligne 17B est par exemple comprise entre 10 m (33 pieds) et 60 m (197 pieds).

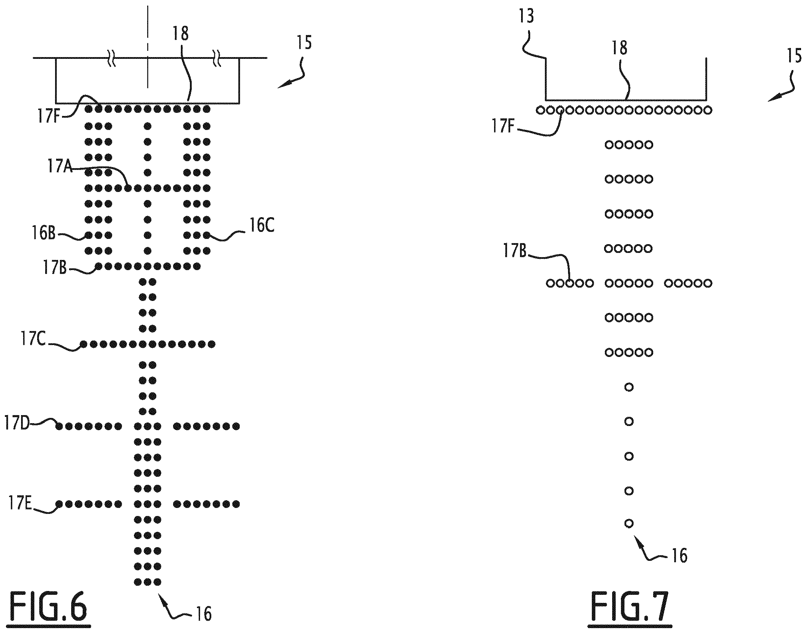

Dans une variante de rampe lumineuse d'approche 15, représentée sur la figure 6, la rampe 15 comporte une ligne transversale 17F située au niveau du seuil de piste 18, et deux lignes longitudinales 16B, 16C parallèles à la ligne axiale 16, raccordant les extrémités libres des lignes transversales 17F, 17A, 17B entre elles, à gauche et à droite de la ligne axiale 16.

Comme pour la rampe 15 représentée sur la figure 5, la rampe 15 représentée sur la figure 6 comporte une ligne transversale 17B qui s'étend transversalement à une distance comprise entre 274 m (900 pieds) et 335 m (1100 pieds) du seuil de piste 18, de préférence à 300 m (1000 pieds) du seuil de piste 18.

La rampe 15 représentée sur la figure 7 comporte une ligne axiale 16 qui s'élargit en se rapprochant du seuil de piste 18. Elle comporte une ligne transversale 17F située au niveau du seuil de piste 18, et une ligne transversale 17B qui s'étend transversalement à une distance comprise entre 274 m (900 pieds) et 335 m (1100 pieds) du seuil de piste 18, de préférence à 300 m (1000 pieds) du seuil de piste 18.

Elle ne comprend pas d'autres lignes transversales.

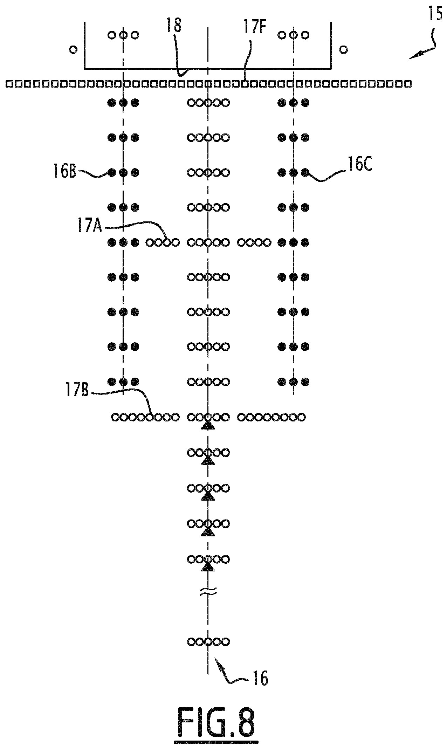

La rampe 15 représentée sur la figure 8 diffère de celle représentée sur la figure 7 par la présence de deux lignes longitudinales 16B, 16C telles que décrites précédemment, et d'une ligne transversale 17A située entre les lignes 17B et 17F.

En référence à la figure 2, le cockpit 14 est muni d'un système principal d'affichage 22 raccordé à une unité centrale d'avionique 20.

Le système principal 22 permet à l'équipage de piloter l'aéronef 12, de gérer sa navigation, de surveiller et commander les différents systèmes fonctionnels présents dans l'aéronef 12. Le système 22 comporte une planche de bord munie d'une pluralité d'écrans de base 24A à 24D formant des afficheurs tête basse.

Dans cet exemple le cockpit 14 est aussi avantageusement muni d'au moins un écran semi-transparent tête haute 26, placé en regard du pare-brise, voire de deux écrans semi-transparent tête haute 26.

Le cockpit 14 est par ailleurs muni d'un organe de commande 28 du pilotage de l'aéronef, tel qu'une manette ou un manche.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de génération d'affichage (non représenté) propre à afficher les différentes fenêtres présentes sur ces écrans 24A à 24D.

L'unité centrale d'avionique 20 est raccordée à un système 30 de capteurs de mesure de paramètres avion et de positionnement spatial de l'aéronef 12.

Le système 30 de capteurs de mesure comporte par exemple des capteurs de mesure de paramètres extérieurs à l'aéronef tel que la température, la pression ou la vitesse, des capteurs de mesure de paramètres interne à l'aéronef et à ses différents systèmes fonctionnels, et des capteurs de positionnement, tel que des capteurs de position géographique, notamment un capteur GPS, des capteurs de détermination de la pente de l'aéronef, notamment au moins une centrale inertielle, et un capteur de détermination d'une hauteur par rapport au sol, notamment un radio-altimètre.

Les capteurs du système de capteurs de mesure 30 sont propres à fournir une information sur la position géographique de l'aéronef 12, sur sa vitesse, son cap et son attitude (assiette longitudinale, angle de roulis).

En référence à la figure 1, le système d'affichage 10 selon l'invention est raccordé au système 30 de mesure et de positionnement.

Le système d'affichage 10 comporte au moins un afficheur 36, et un ensemble 38 de génération d'affichage sur l'afficheur 36, raccordé à l'afficheur 36 et au système de capteurs de mesure 30. Le système 10 comporte en outre une interface homme/machine 40.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

L'afficheur 36 permet au pilote d'observer par transparence l'espace situé à l'avant de l'aéronef 12 et simultanément, un affichage engendré par l'ensemble de génération d'affichage 38.

Dans un premier mode de réalisation, qui sera décrit par la suite, l'afficheur 36 du système d'affichage 10 selon l'invention est l'écran semi-transparent tête haute 26 du cockpit 14.

L'ensemble de génération d'affichage 38 comporte au moins un processeur 42 et au moins une mémoire 44 contenant une pluralité de modules logiciels propres à être exécutés par le processeur 42. Il comporte une base de données 46 de caractéristiques de pistes d'atterrissage, par exemple stockée dans la mémoire 44.

L'ensemble de génération d'affichage 38 comporte un module 48 de récupération des données des capteurs de mesure du système 30, en particulier, de la position géographique de l'aéronef 12 par rapport au sol.

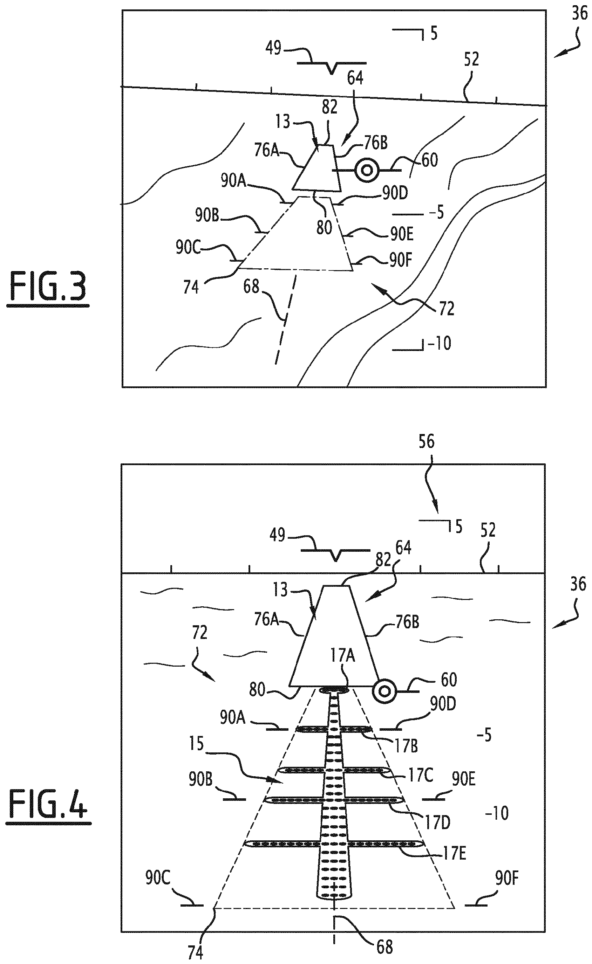

En référence aux figures 1 et 3, l'ensemble de génération d'affichage 38 comporte un module 47 de génération d'un symbole 49 de maquette de l'aéronef, un module 50 de génération d'une ligne 52 d'horizon artificiel, et un module 54 associé de génération d'une échelle de pente 56.

L'ensemble de génération d'affichage 38 comprend également un module 58 de génération d'un symbole 60 de vecteur vitesse et des modules (non représentés) de génération d'autres symboles représentatifs de paramètres de vol, par exemple un indicateur d'altitude, des indicateurs de badin, de vitesse verticale, de vitesse sol d'information moteur, et de conformation de sustentation de l'aéronef.

L'ensemble de génération d'affichage 38 comprend en outre, un module 62 de génération d'un marquage 64 de localisation de la piste d'atterrissage 13, et un module 66 de génération d'un symbole 68 d'axe de piste, le marquage 64 et le symbole 68 étant propres à s'afficher en approche de la piste d'atterrissage 13, avantageusement une fois que la piste d'atterrissage 13 a été sélectionnée par le pilote.

Selon l'invention, l'ensemble de génération d'affichage 38 comporte aussi un module de génération 70 d'un marquage 72 de localisation d'une zone 74 de présence d'une rampe lumineuse d'approche 15 vers la piste d'atterrissage 13.

Le module de génération 47 est propre à engendrer l'affichage d'un symbole 49 de maquette avion qui matérialise une projection à l'infini de l'axe longitudinal de l'aéronef 12, à partir des données reçues des capteurs du système de positionnement 30.

Le module de génération 50 est propre à déterminer, à partir des données reçues des capteurs du système de positionnement 30, la position d'une ligne d'horizon artificiel 52 par rapport à l'attitude courante de l'aéronef. Cette ligne d'horizon 52 est droite lorsque l'aéronef 12 évolue ailes à plat, et s'incline en fonction de l'angle de gîte de l'aéronef 12.

Le module 58 est propre à engendrer l'affichage d'un symbole de vecteur vitesse 60 indiquant la direction du vecteur vitesse de l'aéronef 12, sur la base des données reçues des capteurs du système de mesure 30. L'écart vertical entre la ligne d'horizon artificiel 52, à l'écart de la région déformée 70, représente la pente sol de l'aéronef 12.

Le module de génération 54 est propre à afficher une échelle de pente 56 située de part et d'autre du symbole de vecteur vitesse 60 et matérialisée par des graduations illustrant des degrés de pente successifs.

Le module de génération 62 est propre à engendrer au moins un marquage de localisation de piste 64 matérialisant la position géographique de la piste d'atterrissage 13, lors d'une phase d'approche de l'atterrissage, lorsque la piste d'atterrissage 13 est susceptible d'être visible à l'avant de l'aéronef 12.

Cet affichage peut se faire lorsque le pilote a sélectionné la piste d'atterrissage visée. Il s'affiche par exemple lorsque l'aéronef 12 est à une hauteur inférieure à 365 m (1200 pieds) et se trouve à une distance inférieure à 9,3 km (5 miles nautiques) du seuil 18 de la piste d'atterrissage 13.

Le marquage de localisation de piste 64 comprend au moins deux symboles de localisation latérale gauche et droite 76A, 76B de la position de la piste d'atterrissage 13, dont la position est déterminée à partir des coordonnées géographiques de la piste 13 contenues dans la base de données 46.

Ces symboles 76A, 76B sont par exemple deux lignes convergentes positionnées localement sur l'afficheur 36, pour correspondre à des lignes géographiques 78A, 78B parallèles à l'axe de la piste d'atterrissage 13 sur le sol (voir figure 5), situées le long des bords de la piste d'atterrissage 13 ou à une distance prédéfinie de ceux-ci, telles qu'obtenues à partir de la base de données 46.

La longueur des lignes géographiques 78A, 78B, et par suite, la longueur sur l'afficheur 36 des symboles 76A, 76B correspond à la longueur géographique de la piste d'atterrissage 13, tel qu'obtenue à partir de la base de données 46.

Éventuellement, le marquage de localisation de piste 64 comprend en outre un symbole 80 de localisation du seuil de piste et un symbole 82 de localisation de fin de piste, formés respectivement par des lignes raccordant les extrémités longitudinales des symboles 76A, 76B.

Le module de génération 66 est propre à afficher un symbole 68 illustrant la direction sur l'afficheur 36 de l'axe de piste A-A', par exemple une ligne pointillée, en dessous et à l'écart de la position correspondant au seuil de piste 18 sur l'afficheur 36.

La zone de présence 74 sur l'afficheur 36 correspond au sol à une zone géographique 88 prédéfinie, matérialisée sur la figure 5. La zone géographique 88 contient au moins 50%, et de préférence totalement la rampe lumineuse d'approche 15.

La zone géographique 88 est par exemple un trapèze d'axe A-A', de sommet situé au seuil de piste 18. L'angle d'ouverture α du trapèze, pris à partir d'un point de toucher cible 89 est défini pour que la largeur de la zone géographique 88, prise entre 274 m (900 pied) et 335 m (1100 pieds) du seuil de la piste 18 soit supérieure à la largeur maximale d'une ligne transversale 17B située à cette distance, avec une marge de précision d'affichage.

La marge de précision d'affichage est déterminée en fonction de l'imprécision de positionnement de la piste, de l'imprécision des données des capteurs avion (position de l'aéronef et attitude, notamment le cap), et de l'imprécision sur la direction de visée à travers l'afficheur 36.

Cette marge est choisie pour s'assurer que la ligne transversale 17B reste comprise dans la zone géographique 88, même lorsque les erreurs sont présentes.

Typiquement, pour des erreurs engendrant un décalage de 0,5° en cap entre l'axe calculé de la piste et l'axe réel, la marge est d'environ 15 m de chaque côté, soit 30 m.

La largeur de la zone géographique au niveau de la ligne transversale 17B est de préférence supérieure à 60 m et comprise entre 60 m et 100 m.

Le point de toucher 89 est généralement situé à environ 300 m (1000 pieds) à l'avant du seuil de piste 18.

Une telle zone géographique 88 contient totalement la plupart des rampes d'approches 15 existantes.

Le marquage de localisation 72 sur l'afficheur 36 comporte au moins un symbole 90A à 90F de localisation latérale de la zone de présence 74.

Dans cet exemple, le marquage de localisation 72 comporte au moins un symbole 90A à 90C de localisation latérale gauche et de la zone de présence 74 et au moins un symbole 90D à 90F de localisation latérale droite de la zone de présence 74.

Chaque symbole 90A à 90F est ici formé par un trait horizontal.

Le marquage de localisation 72 comprend ici une première série de symboles de localisation latérale gauche 90A à 90C espacés longitudinalement les uns les autres et une deuxième série de symboles de localisation latérale droite 90D à 90E espacés longitudinalement les uns des autres.

Les symboles de localisation latérale gauche 90A à 90C et les symboles de localisation latérale droite 90D à 90E convergent vers l'axe de piste A-A' en se rapprochant de la piste d'atterrissage 13.

La position de chaque symbole de localisation latérale 90A à 90F sur l'écran correspond respectivement à un point géographique 92E à 92F sur les côtés de la zone géographique 88, situé à une distance prédéterminée D1 à D3 du seuil de piste 18.

Avantageusement, au moins un point géographique 92A situé à gauche de la zone géographique 88 et un point géographique 92D situé à droite de la zone géographique sont placés à une distance du seuil de piste 18 correspondant à la présence d'une ligne transversale 17B de lampes.

Ainsi, les symboles de localisation latérale 90A et 90D engendrés par le module 70 et correspondant respectivement aux points géographiques 92A, 92D sont propres à s'afficher sur l'afficheur 36 de part et d'autre de la position où apparaîtra la ligne transversale de lampes 17B.

De préférence, les symboles de localisation latérale 90A et 90D correspondent respectivement à un point géographique 92A situé à gauche de la zone géographique 88 et à un point géographique 92D situé à droite de la zone géographique 88, qui sont placés à une distance axiale D1 du seuil de piste, prise le long de l'axe A-A' comprise entre 274 m (900 pieds) et 335 m (1100 pieds), pour correspondre à une ligne transversale de lampe 17B présente sur la plupart des rampes lumineuses d'approches 15 existantes.

La distance géographique séparant transversalement les points géographiques 92A, 92D est alors comprise entre 30 m et 100 m avec la marge de précision d'affichage décrite plus haut.

Dans l'exemple représenté sur la figure 3, au moins deux symboles de localisation latérale gauche et droit 90C, 90F correspondent respectivement à un point géographique 92C situé à gauche de la zone géographique 88 et à un point géographique 92F situé à droite de la zone géographique 88 qui sont placés à une distance axiale D3 du seuil de piste, prise le long de l'axe A-A', supérieure à 610 m (2000 pieds), et généralement comprise entre 610 m et 1067 m (3500 pieds) pour correspondre sensiblement à l'extrémité axiale de la ligne 16, et ainsi englober sensiblement toute la rampe 15.

Par ailleurs, deux symboles de localisation latérale gauche et droit 90B et 90E correspondent respectivement à un point géographique 92B situé à gauche de la zone géographique 88 et à au moins un point géographique 92E situé à droite de la zone géographique 88 qui sont placés à une distance axiale D2 du seuil de piste, prise le long de l'axe A-A', comprise entre la distance axiale D1 et la distance axiale D3, par exemple à une distance sensiblement égale à 6 cm (2000 pieds).

La définition de la zone géographique 88 ainsi obtenue et sa délimitation par les points géographiques prédéfinis 92A à 92F engendre des symboles de localisation 90A à 90F qui délimitent la zone de localisation 76 de manière suffisamment précise sur l'afficheur 36 pour englober la plupart des structures de rampes d'approche 15 existantes devant être visualisées par le pilote.

En outre, le symbole 68 illustrant la direction de l'axe de piste A-A' est placé par le module de génération 66 en dessous de la zone de présence 74, verticalement sous les symboles 90A à 90F, de manière à ne pas interférer avec la zone de présence 74.

Le fonctionnement du système d'affichage 10 selon l'invention, lors de l'approche vers une piste d'atterrissage 13 va maintenant être décrit, en référence aux figures 3 à 4.

Initialement, l'aéronef 12 descend vers la piste d'atterrissage 13. Comme illustré par la figure 3, le module de génération 50 engendre l'affichage de la ligne d'horizon 52. Le module de génération 54 engendre l'affichage d'une échelle de pente 56 et le module de génération 58 engendre l'affichage d'un symbole de vecteur vitesse 60 dont la distance verticale à la ligne d'horizon 52 traduit la pente avion, sur l'échelle de pente 56.

A une distance donnée de la piste d'atterrissage 13, le pilote sélectionne la piste d'atterrissage 13 choisie. Lorsque la distance est inférieure à une distance d'affichage donnée, par exemple 9,6 km (5 miles nautiques) ou/et à une hauteur d'affichage donnée, par exemple 365 m (1200 pieds), le module de génération 62 active l'affichage du marquage de localisation de piste 64. Il interroge la base de données 46 pour déterminer la localisation géographique des lignes 78A, 78B et transcrit cette position géographique en une position correspondante sur l'afficheur 36 pour afficher les lignes latérales 76A, 76B.

Le module de génération 66 détermine la position géographique de l'axe de piste A-A' et calcule en conséquence la position sur l'écran du symbole d'axe de piste 68, dans le prolongement du marquage de localisation de piste 64, à l'écart et en dessous de celui-ci.

Le module de génération 70 active alors le marquage de localisation 72 de la zone de présence 74.

Dans l'exemple représenté sur les figures 3 et 5, le module de génération 70 calcule en temps réel la position géographique de la zone géographique 88 à partir de la position géographique du seuil de piste 18, de la position du point de toucher cible 89 et de la largeur de la zone géographique 88 à une distance donnée du seuil de piste 18, par exemple comprise entre 274 m (900 pieds) et 335 m (1100 pieds) du seuil de piste 18 le long de l'axe A-A'.

Il détermine alors la position géographique des points géographiques 92A à 92F à partir de la position axiale du seuil de piste 18 sur l'axe A-A' de piste et des distances prédéterminées D1 à D3.

Il transcrit en temps réel cette position géographique en une position sur l'afficheur 36 et affiche chaque symbole de localisation 90A à 90F sur l'afficheur 36 à une position correspondant à la position géographique 92A à 92F. La zone de présence 74 de la rampe lumineuse d'approche 15 est donc physiquement définie sur l'afficheur 36 en étant délimitée latéralement par les symboles 90A à 90F.

Dans l'exemple illustré sur la figure 3, la couche nuageuse masque la rampe d'approche 15. Le pilote peut cependant en temps réel anticiper où va apparaître la rampe lumineuse d'approche 15 et concentrer sa recherche uniquement sur une zone 74 de taille réduite sur l'afficheur 36 en étant guidé vers cette zone 74 par la présence du marquage de localisation 72.

En particulier, le pilote peut consulter une carte d'approche associée à la piste d'atterrissage 13 pour déterminer le type de rampe associée à la piste d'atterrissage 13 visée. Il peut anticiper qu'une ligne transversale 17B de lampes va apparaître entre les symboles de localisation 90A, 90D, et que le reste de la rampe lumineuse d'approche 15 sera situé longitudinalement entre les symboles 90A à 90C d'un côté et entre les symboles 90D à 90F, d'un autre côté.

Ceci est illustré par la figure 4, une fois la couche nuageuse percée, la rampe lumineuse d'approche 15 apparaît dans la zone de présence 74 à l'intérieur du marquage de localisation 72.

La présence du marquage de localisation 72 simplifie donc grandement la tâche du pilote et diminue sa charge de travail, puisqu'il sait précisément où chercher la rampe d'approche 15 à l'avant de l'aéronef 12, en vue de prendre la décision d'atterrir ou non sur la piste d'atterrissage 13.

Dans une variante, les symboles de localisation latérale 90A à 90F ne sont pas formés par des traits horizontaux, mais par d'autres symboles tels que des traits verticaux, des croix, des formes géométriques telles que des polygones.

Dans une autre variante, le marquage de localisation 72 comprend, en substitution ou en complément des symboles de localisation latérale 90A à 90F discrets précédemment décrits, des symboles de localisation latérale formés par des lignes latérales de localisation, dont la position sur l'écran correspond aux bords latéraux de la zone géographique 88 visible sur la figure 5.

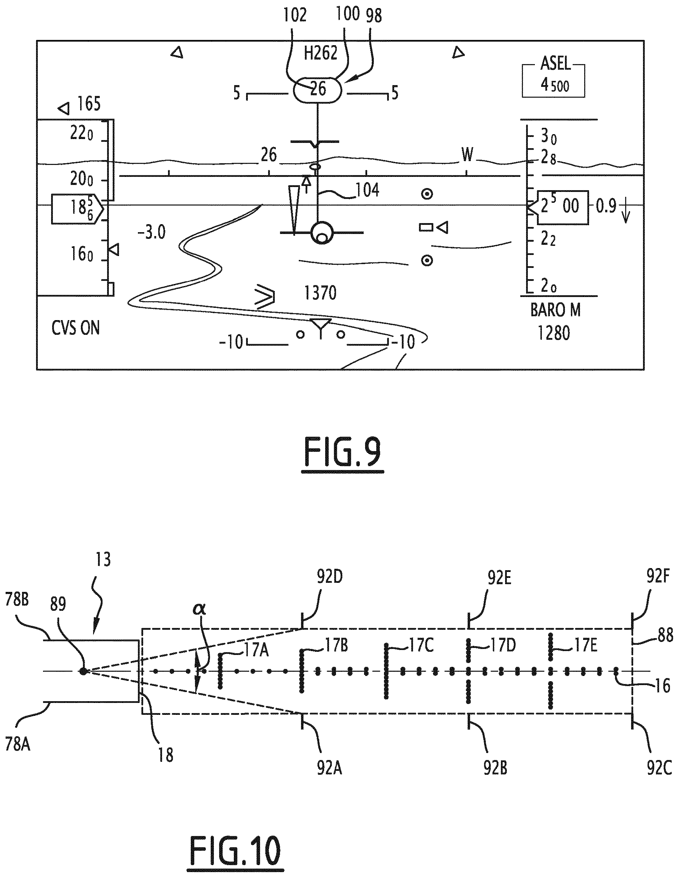

Dans une autre variante visible sur la figure 10, la zone géographique 88 n'a pas une forme de trapèze, mais présente une autre forme polygonale, notamment une forme rectangulaire avec des lignes parallèles à la piste 13 ou une forme avec des bords incurvés (non représentée). L'affichage des symboles de localisation latérale 90A à 90F est alors modifié pour correspondre aux bords de la zone géographique 88.

Dans une variante illustrée par la figure 1 (en pointillés) et par la figure 9, l'ensemble de génération d'affichage 38 comporte un module 96 de génération d'un symbole 98 d'identification de la piste d'atterrissage 13, pointant sur la position de la piste d'atterrissage 13, propre à engendrer et afficher le symbole 98 avant l'affichage du marquage de localisation de piste 64 et du marquage de localisation 72 de la zone de présence 74 d'une rampe d'approche 15.

En référence à la figure 9, le symbole d'identification de la piste d'atterrissage 13 comporte par exemple un cartouche 100 contenant une information 102 d'identification de la piste d'atterrissage 13 et une ligne 104 pointant sur la position de la piste d'atterrissage 13 à partir du cartouche 100.

L'information d'identification 102 de la piste d'atterrissage 13 est par exemple le numéro de la piste d'atterrissage, obtenu à partir de la base de données 46 de pistes d'atterrissage 13.

En fonctionnement, le module de génération 96 est propre à activer l'affichage du symbole 98, de préférence lorsque les dimensions de la piste d'atterrissage 13 sur l'afficheur 36 sont trop petites pour afficher le marquage de localisation de piste 64.

Dans une variante, le système d'affichage 10 comporte une base de données 200 de rampes d'approches 15, avantageusement contenue dans la mémoire 44, contenant des informations relatives aux caractéristiques des rampes associées à chaque piste d'atterrissage 13 sur laquelle l'aéronef 12 est susceptible d'atterrir.

Les informations sont par exemple la longueur maximale de la rampe 15, en particulier de sa ou de ses lignes longitudinales 16, la position et/ou la largeur de la ou de chaque ligne transversale 17A à 17E, etc.

Le module de génération 70 est alors propre à interroger la base de données 200 en approche d'une piste 13 donnée pour calculer les dimensions de la zone géographique 88 et la position géographiques 92A à 92F correspondant à chaque symbole de délimitation 90A à 90F devant être affiché en fonction d'au moins une information caractéristique de la rampe d'approche 15 issue de la base de données 200.

En particulier, le module de génération 70 est propre à déterminer la position des points 92C, 92F correspondant à l'extrémité axiale de la ligne 16, et à partir de la longueur de la rampe 15 chargée dans la base de données 200.

Dans une autre variante, l'afficheur 36 est un écran tête basse raccordée à un capteur optique permettant d'observer l'espace à l'avant de l'aéronef 12.

Dans une variante, le système 10 n'affiche pas nécessairement une ligne d'horizon et/ou une échelle de pente, mais juste le marquage de localisation 72.

## Revendications

1. - Système (10) d'affichage d'un aéronef (12), destiné à être implanté dans le cockpit d'un aéronef, le système (10) étant destiné à faciliter le pilotage de l'aéronef lors d'un atterrissage dans des conditions de visibilité faible ou nulle et à aider un pilote dans le repérage visuel d'une rampe lumineuse d'approche (15) vers une piste d'atterrissage (13) munie d'une rampe lumineuse d'approche (15) s'étendant à l'avant de la piste d'atterrissage (13), dans l'axe de celle-ci, en vue de prendre la décision de poursuivre ou non l'atterrissage sur la piste d'atterrissage (13), le système (10) comprenant :
- un afficheur (36) ;
- un ensemble de génération d'affichage (38) sur l'afficheur (36) raccordé à l'afficheur (36) et à un système de capteurs de mesure (30) de paramètres avion et de positionnement spatial de l'aéronef (12),
l'afficheur (36) permettant au pilote d'observer l'espace situé à l'avant de l'aéronef et simultanément, un affichage engendré par l'ensemble de génération d'affichage (38) ;
dans lequel l'ensemble de génération d'affichage (38) est propre à afficher, en approche d'une piste d'atterrissage (13), un marquage de localisation (72) d'une zone de présence (74) de la rampe lumineuse d'approche (15) vers la piste d'atterrissage (13), à l'intérieur duquel, est destinée à apparaitre la rampe lumineuse d'approche (15) masquée par une couche nuageuse, une fois la couche nuageuse percée,
dans lequel le marquage de localisation (72) comprend au moins deux symboles opposés (90A ; 90D) de localisation latérale de la zone de présence (74) de la rampe lumineuse d'approche (15), délimitant à gauche et à droite la zone de présence (74) de la rampe lumineuse d'approche (15), les deux symboles opposés (90A, 90D) étant situés à une position correspondant à une distance au sol (D1) prédéterminée du seuil de piste (18) à laquelle la rampe lumineuse d'approche (15) comprend une ligne transversale (17B) de lampes, **caractérisé en ce que** l'écartement latéral entre les symboles opposés (90A, 90D) correspond à une distance au sol strictement supérieure à la largeur de la ligne transversale (17B).

2. - Système (10) selon la revendication 1, dans lequel le marquage de localisation (72) comporte au moins une suite de symboles de localisation latérale (90A à 90C ; 90D à 90F) d'un côté de la zone de présence (74) de la rampe lumineuse d'approche (15), la suite de symboles de localisation latérale (90A à 90C ; 90D à 90F) convergeant vers un axe longitudinal de la piste d'atterrissage (13).

3. - Système (10) selon la revendication 2, dans lequel le marquage de localisation (72) comporte deux suites de symboles de localisation latérale (90A à 90C ; 90D à 90F) délimitant respectivement le côté gauche et le côté droit de la zone de présence (74) de la rampe lumineuse d'approche (15).

4. - Système (10) selon l'une quelconque des revendications précédentes, dans lequel la distance au sol prédéterminée (D1) est comprise entre 275 m et 335 m.

5. - Système (10) selon l'une quelconque des revendications précédentes, dans lequel l'ensemble de génération d'affichage (38) est propre à afficher un marquage de position (64) de la piste d'atterrissage (13), situé au-dessus du marquage de localisation (72) de la zone de présence (74) d'une rampe lumineuse d'approche (15) vers la piste d'atterrissage (13).

6. - Système (10) selon l'une quelconque des revendications précédentes, dans lequel l'ensemble de génération d'affichage (38) est propre à afficher un symbole d'axe de piste (68), situé au-dessous du marquage de localisation (72) de la zone de présence (74) d'une rampe lumineuse d'approche (15) vers la piste d'atterrissage (13).

7. - Système (10) selon l'une quelconque des revendications précédentes, comprenant une base de données (200) de rampes d'approche (18), contenant au moins une information caractéristique de chaque rampe d'approche (15) associée à une piste d'atterrissage (13) visée par l'aéronef (12), l'ensemble de génération d'affichage (38) étant propre à engendrer et afficher le marquage de localisation (72) en utilisant au moins une information caractéristique de la rampe d'approche (15) approchée par l'aéronef (12) contenue dans la base de données (200) de rampe d'approche (15).

8. - Système (10) selon l'une quelconque des revendications précédentes, dans lequel l'ensemble de génération d'affichage (38) est propre à afficher dynamiquement sur l'afficheur (36) au moins une ligne d'horizon (52) et une échelle de pente (56) par rapport à la ligne d'horizon (52).

9. - Système (10) selon l'une quelconque des revendications précédentes, dans lequel l'ensemble de génération d'affichage (38) est propre à afficher, avant l'affichage du marquage de localisation (72) de la zone de présence (74) d'une rampe lumineuse d'approche (15) vers la piste d'atterrissage (13), un symbole (98) d'identification de la piste d'atterrissage (13), pointant sur la position de la piste d'atterrissage (13) sur l'afficheur (36).

10. - Système (10) selon l'une quelconque des revendications précédentes dans lequel l'afficheur (36) est un afficheur au moins partiellement transparent, tel qu'un écran semi transparent placé devant un pare-brise du cockpit, un système de projection d'images sur le pare-brise du cockpit, un pare-soleil semi-transparent, un viseur de casque, ou une lunette semi-transparente proche de l'oeil ou dans lequel l'afficheur (36) est un écran tête basse raccordée à un capteur optique permettant d'observer l'espace à l'avant de l'aéronef (12).

11. - Procédé d'affichage dans un aéronef (12), comprenant les étapes suivantes :
- fourniture d'un système (10) selon l'une quelconque des revendications précédentes ;
- en approche d'une piste d'atterrissage (13) munie d'une rampe lumineuse d'approche (15) s'étendant à l'avant de la piste d'atterrissage, dans l'axe de celle-ci, affichage, par l'ensemble de génération d'affichage (38) d'un marquage de localisation (72) de la zone de présence (74) de ladite rampe lumineuse d'approche (15) vers la piste d'atterrissage (13),
dans lequel, dans la zone de présence (74) à l'intérieur du marquage de localisation (72) apparait la rampe lumineuse d'approche (15) masquée par une couche nuageuse, une fois la couche nuageuse percée.

## Patentansprüche

1. Anzeigesystem (10) eines Luftfahrzeugs (12), das dazu bestimmt ist, in das Cockpit eines Luftfahrzeugs implementiert zu werden, wobei das System (10) dazu bestimmt ist die Steuerung des Luftfahrzeugs bei einer Landung unter schlechten oder keinen Sichtbedingungen zu erleichtern und einen Piloten bei der visuellen Erkennung einer leuchtenden Anflugrampe (15) zu einer Landebahn (13) zu unterstützen, die mit einer leuchtenden Anflugrampe (15) versehen ist, die sich vor der Landebahn (13) in deren Achse erstreckt, um eine Entscheidung darüber zu treffen, ob die Landung auf der Landebahn (13) fortgesetzt werden soll, das System (10) umfassend:
- eine Anzeige (36);
- eine Anzeigeerzeugungsanordnung (38) auf der Anzeige (36), die mit der Anzeige (36) und mit einem Messsensorsystem (30) von Flugzeugparametern und der räumlichen Positionierung des Luftfahrzeugs (12) verbunden ist,
wobei die Anzeige (36) es dem Piloten ermöglicht, den Raum, der sich vor dem Luftfahrzeug befindet, und gleichzeitig eine Anzeige, die von der Anzeigeerzeugungsanordnung (38) erzeugt wird, zu beobachten;
wobei die Anzeigeerzeugungsanordnung (38) dazu geeignet ist, um beim Anflug auf eine Landebahn (13) eine Ortsmarkierung (72) eines Anwesenheitsbereichs (74) der leuchtenden Anflugrampe (15) zu der Landebahn (13) anzuzeigen, in dessen Inneren die von einer Wolkenschicht verdeckte leuchtende Anflugrampe (15) erscheinen soll, sobald die Wolkenschicht durchbrochen ist,
wobei die Ortsmarkierung (72) mindestens zwei gegenüberliegende Symbole (90A; 90D) zur seitlichen Lokalisierung des Anwesenheitsbereichs (74) der leuchtenden Anflugrampe (15) umfasst, die den Anwesenheitsbereich (74) der leuchtenden Anflugrampe (15) links und rechts begrenzen, wobei sich die zwei gegenüberliegenden Symbole (90A, 90D) an einer Position befinden, die einem vorbestimmten Bodenabstand (D1) von der Landebahnschwelle (18) entspricht, zu der die leuchtende Anflugrampe (15) eine Querlinie (17B) von Lampen umfasst, **dadurch gekennzeichnet, dass** der seitliche Abstand zwischen den gegenüberliegenden Symbolen (90A, 90D) einem Abstand zum Boden entspricht, der strikt größer ist als die Breite der Querlinie (17B).

2. System (10) nach Anspruch 1, wobei die Ortsmarkierung (72) mindestens eine Abfolge von seitlichen Ortssymbolen (90A bis 90C; 90D bis 90F) auf einer Seite des Anwesenheitsbereichs (74) der leuchtenden Anflugrampe (15) umfasst, wobei die Abfolge von seitlichen Ortssymbolen (90A bis 90C; 90D bis 90F) in Richtung einer Längsachse der Landebahn (13) konvergiert.

3. System (10) nach Anspruch 2, wobei die Ortsmarkierung (72) zwei Abfolgen von seitlichen Ortssymbolen (90A bis 90C; 90D bis 90F) umfasst, die jeweils die linke und die rechte Seite des Anwesenheitsbereichs (74) der leuchtenden Anflugrampe (15) begrenzen.

4. System (10) nach einem der vorherigen Ansprüche, wobei der vorbestimmte Abstand zum Boden (D1) zwischen 275 m und 335 m liegt.

5. System (10) nach einem der vorherigen Ansprüche, wobei die Anzeigeerzeugungsanordnung (38) geeignet ist, um eine Positionsmarkierung (64) der Landebahn (13) anzuzeigen, die sich über der Ortsmarkierung (72) des Anwesenheitsbereichs (74) einer leuchtenden Anflugrampe (15) zu der Landebahn (13) befindet.

6. System (10) nach einem der vorherigen Ansprüche, wobei die Anzeigeerzeugungsanordnung (38) geeignet ist, um ein Landebahnachsensymbol (68) anzuzeigen, das sich unterhalb der Ortsmarkierung (72) des Anwesenheitsbereichs (74) einer Anfluglichtrampe (15) zu der Landebahn (13) befindet.

7. System (10) nach einem der vorherigen Ansprüche, umfassend eine Datenbank (200) von Anflugrampen (18), die mindestens eine charakteristische Information von jeder Anflugrampe (15) enthält, die mit einer Landebahn (13) assoziiert ist, die von dem Luftfahrzeug (12) anvisiert wird, wobei die Anzeigeerzeugungsanordnung (38) geeignet ist, um die Ortsmarkierung (72) zu erzeugen und anzuzeigen, indem sie mindestens eine charakteristische Information der Anflugrampe (15), die von dem Luftfahrzeug (12) angeflogen wird, verwendet, die in der Datenbank (200) der Anflugrampe (15) enthalten ist.

8. System (10) nach einem der vorherigen Ansprüche, wobei die Anzeigeerzeugungsanordnung (38) dazu geeignet ist, auf der Anzeige (36) dynamisch mindestens eine Horizontlinie (52) und eine Neigungsskala (56) in Bezug auf die Horizontlinie (52) anzuzeigen.

9. System (10) nach einem der vorherigen Ansprüche, wobei die Anzeigeerzeugungsanordnung (38) dazu geeignet ist, um vor der Anzeige der Ortsmarkierung (72) des Anwesenheitsbereichs (74) einer leuchtenden Anflugrampe (15) zu der Landebahn (13) ein Symbol (98) zur Identifizierung der Landebahn (13) anzuzeigen, das auf die Position der Landebahn (13) auf der Anzeige (36) zeigt.

10. System (10) nach einem der vorherigen Ansprüche, wobei die Anzeige (36) eine zumindest teilweise transparente Anzeige ist, wie beispielsweise ein halbtransparenter Bildschirm, der vor einer Windschutzscheibe des Cockpits platziert ist, ein System zur Projektion von Bildern auf die Windschutzscheibe des Cockpits, eine halbtransparente Sonnenblende, ein Helmvisier oder eine halbtransparente Brille in der Nähe des Auges oder wobei die Anzeige (36) ein Head-up-Display ist, das mit einem optischen Sensor verbunden ist, der es ermöglicht, den Raum vor dem Luftfahrzeug (12) zu beobachten.

11. Verfahren zur Anzeige in einem Luftfahrzeug (12), umfassend die folgenden Schritte:
- Bereitstellen eines Systems (10) nach einem der vorherigen Ansprüche;
- beim Anflug auf eine Landebahn (13), die mit einer leuchtenden Anflugrampe (15) versehen ist, die sich vor der Landebahn in deren Achse erstreckt, Anzeigen, durch die Anzeigeerzeugungsanordnung (38), einer Ortsmarkierung (72) des Anwesenheitsbereichs (74) der leuchtenden Anflugrampe (15) in Richtung der Landebahn (13),
wobei in dem Anwesenheitsbereich (74) innerhalb der Ortsmarkierung (72) die von einer Wolkenschicht verdeckte leuchtende Anflugrampe (15) erscheint, sobald die Wolkenschicht durchbrochen ist.

## Claims

1. A display system (10) of an aircraft (12), intended to be installed in an aircraft, the system (10) being intended to facilitate the piloting of the aircraft during landing under conditions with little or no visibility and to assist the pilot in the visual identification of an approach light ramp (15) toward a landing strip (13) having an approach light ramp (15) extending in front of the landing strip (13), in the axis thereof, in order to decide whether to continue the landing on the landing strip (13), the system (10) comprising:
- a display unit (36);
- an assembly (38) for generating a display on the display unit (36) connected to the display unit (36) and to a system of measuring sensors (30) for measuring airplane and spatial positioning parameters of the aircraft (12),
the display unit (36) allowing the pilot to observe the area situated in front of the aircraft, and simultaneously, a display generated by the display-generating assembly (38);
wherein the display-generating assembly (38) is able to display, on approach to a landing strip (13), a localization marking (72) of a presence zone (74) of a approach light ramp (15) toward the landing strip (13), into which the approach light ramp (15) concealed by a cloud cover is intended to appear, once the cloud cover has been pierced,
wherein the localization marking (72) includes at least two opposite lateral localization symbols (90A; 90D) of the presence zone (74) of the approach light ramp (15), delimiting the presence zone (74) of the approach light ramp (15) to the left and right, the two opposite symbols (90A, 90D) being situated in a position corresponding to a predetermined distance on the ground (D1) from the runway threshold (18) at which the approach light ramp (15) comprises a transverse row (17B) of lights, **characterized in that** the lateral separation between the opposite symbols (90A, 90B) corresponds to a distance on the ground strictly greater than the width of the transverse row (17B).

2. The system (10) according to claim 1, wherein the localization marking (72) includes at least one series of lateral localization symbols (90A to 90C; 90D to 90F) on one side of the presence zone (74) of the approach light ramp (15), the series of lateral localization symbols (90A to 90C; 90D to 90F) converging toward a longitudinal axis of the runway (13).

3. The system (10) according to claim 2, wherein the localization marking (72) includes two series of lateral localization symbols (90A to 90C; 90D to 90F) respectively delimiting the left side and right side of the presence zone (74) of the approach light ramp (15).

4. The system (10) according to any one of the preceding claims, wherein the predetermined distance on the ground (D1) is comprised between 275 m and 335 m.

5. The system (10) according to any one of the preceding claims, wherein the display-generating assembly (38) is able to display a position marking (64) of the landing strip (13), situated above the localization marking (72) of the presence zone (74) of the approach light ramp (15) toward the landing strip (13).

6. The system (10) according to any one of the preceding claims, wherein the display-generating assembly (38) is able to display a runway axis symbol (68), situated below the localization marking (72) of the presence zone (74) of a approach light ramp (15) toward the landing strip (13).

7. The system (10) according to any one of the preceding claims, comprising a database (200) of approach ramps (18), containing at least one piece of information characteristic of each approach ramp (15) associated with a landing strip (13) targeted by the aircraft (12), the display-generating assembly (38) being able to create and display the localization marking (72) by using at least one piece of information characteristic of the approach ramp (15) approached by the aircraft (12) contained in the database (200) of approach ramps (15).

8. The system (10) according to any one of the preceding claims, wherein the display-generating assembly (38) is capable of dynamically displaying, on the display unit (36), at least one horizon line (52) and a slope scale (56) relative to the horizon line (52).

9. The system (10) according to any one of the preceding claims, wherein the display-generating assembly (38) is able to display, before the display of the localization marking (72) of the presence zone (74) of a approach light ramp (15) toward the landing strip (13), an identification symbol (98) of the landing strip (13), pointing to the position of the landing strip (13) on the display unit (36).

10. The system (10) according to any one of the preceding claims, wherein the display unit (36) is an at least partially transparent display unit, such as a semitransparent screen placed in front of a windshield of the cockpit, a system for projecting images on the windshield of the cockpit, a semitransparent sunshade, a helmet visor, or a semitransparent glass close to the eye or wherein the display unit (36) is a head down monitor connected to an optical sensor making it possible to observe the area in front of the aircraft (12)

11. A display method in an aircraft (12), comprising the following steps:
- providing a system (10) according to any one of the preceding claims;
- upon approaching a landing strip (13) having an approach light ramp (15) extending in front of the landing strip (13), in the axis thereof, displaying, via the display-generating assembly (38), of a localization marking (72) of said presence zone (74) of the approach light ramp (15) toward the landing strip (13), wherein in presence zone (74) inside the localization marking (72) the approach light ramp (15) concealed by a cloud cover appears, once the cloud cover has been pierced
